# EUROPEAN PATENT SPECIFICATION

(11) **EP 4 343 632 B1**
(45) Date of publication and mention of the grant of the patent: **04.12.2024**
(21) Application number: 23190796.5
(22) Date of filing: 10.08.2023
(51) Int. Cl.: G06N 3/0495, G06N 3/063

(54) **HYBRID-SPARSE NPU WITH FINE-GRAINED STRUCTURED SPARSITY**
HYBRID-SPARSE-NPU MIT FEINKÖRNIGER STRUKTURIERTER SPARSITY
NPU HYBRIDE-SPARSE À RARETÉ STRUCTURÉE À GRAINS FINS

(30) Priority: 21.09.2022 US 202263408827 P; 21.09.2022 US 202263408828 P; 03.11.2022 US 202217980541
(43) Date of publication of application: 27.03.2024
(73) Proprietor: Samsung Electronics Co., Ltd., Suwon-si, Gyeonggi-do 16677 (KR)
(72) Inventor: SHIN, Jong Hoon, San Jose, CA, 95134 (US); PEDRAM, Ardavan, San Jose, CA, 95134 (US); HASSOUN, Joseph, San Jose, CA, 95134 (US)
(74) Representative: Kuhnen & Wacker Patent- und Rechtsanwaltsbüro PartG mbB

(56) References cited:
- HOON SHIN JONG ET AL: "Griffin: Rethinking Sparse Optimization for Deep Learning Architectures", 2022 IEEE INTERNATIONAL SYMPOSIUM ON HIGH-PERFORMANCE COMPUTER ARCHITECTURE (HPCA), IEEE, 2 April 2022 (2022-04-02), pages 861 - 875, XP034124300, DOI: 10.1109/HPCA53966.2022.00068
- JANG JUN-WOO ET AL: "Sparsity-Aware and Re-configurable NPU Architecture for Samsung Flagship Mobile SoC", 2021 ACM/IEEE 48TH ANNUAL INTERNATIONAL SYMPOSIUM ON COMPUTER ARCHITECTURE (ISCA), IEEE, 14 June 2021 (2021-06-14), pages 15 - 28, XP033951936, DOI: 10.1109/ISCA52012.2021.00011

## Description

### TECHNICAL FIELD

The subject matter disclosed herein relates to neural network processing devices. More particularly, the subject matter disclosed herein relates to a neural processing unit that supports dual-sparsity modes.

### BACKGROUND

Deep neural networks (DNNs) may be accelerated by Neural Processing Units (NPUs). The operand sparsity associated with General Matrix Multiply (GEMM) operations in DNNs may be used to accelerate operations performed by NPUs. Fine-grained structured sparsity, especially N:M sparsity (N nonzero elements out of M weight values), may be helpful to maintain accuracy and save hardware overhead compared to random sparsity. Existing technology related to structured sparsity, however, only supports weight sparsity.

HOON SHIN JONG ET AL: "Griffin: Rethinking Sparse Optimization for Deep Learning Architectures", 2022 IEEE INTERNATIONAL SYMPOSIUM ON HIGH-PERFORMANCE COMPUTER ARCHITECTURE (HPCA), IEEE, 2 April 2022 (2022-04-02), pages 861-875, relates to Sparse Optimization for Deep Learning Architectures.

JANG JUN-WOO ET AL: "Sparsity-Aware and Re-configurable NPU Architecture for Samsung Flagship Mobile SoC", 2021 ACM/IEEE 48TH ANNUAL INTERNATIONAL SYMPOSIUM ON COMPUTER ARCHITECTURE (ISCA), IEEE, 14 June 2021 (2021-06-14), pages 15-28, relates to a NPU architecture for a mobile system on chip.

### SUMMARY

The invention is defined by the independent claims. Preferred embodiments are defined by the dependent claims.

### BRIEF DESCRIPTION OF THE DRAWING

In the following section, the aspects of the subject matter disclosed herein will be described with reference to the figures, in which:
FIG. 1A depicts an example of a NPU architecture and an example of a dual-sparsity NPU architecture according to the subject matter disclosed herein;
FIG. 1B depicts the example of a NPU architecture and an example of a dual-sparsity NPU architecture according to the subject matter disclosed herein;
FIG. 2 depicts an example of a NPU architecture and an example of a Hybrid Sparsity-V2 architecture according to the subject matter disclosed herein; and
FIG. 3 depicts an electronic device that may include at least one NPU that supports dual-sparsity modes according to the subject matter disclosed herein.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The subject matter disclosed herein provides an NPU architecture, generally referred to as a hybrid-sparsity architecture, that supports activation sparsity in a NPU that is also configured for N:M fine-grain structured weight sparsity. The hybrid-sparsity NPU may operate in several sparse modes, such as, structured weight sparsity, random weight sparsity, random activation sparsity, dual sparsity with random activation sparsity and structured weight sparsity, and dual sparsity with random activation sparsity and random weight sparsity.

Two different types of sparse NPU core architectures are disclosed herein. A first type of sparse NPU core architecture supports structured weight sparsity, random weight sparsity, random activation sparsity, dual sparsity with random activation sparsity and structured weight sparsity, and dual sparsity with random activation sparsity and random weight sparsity. A second type of sparse NPU core architecture supports dual sparsity and uses an ANDing technique. A significant benefit provided by the subject matter disclosed herein is that a hybrid sparsity NPU may be efficiently implemented using sparse logic.

While an existing system only supports N:M=2:4 structured weight sparsity, the hybrid-sparsity NPU disclosed herein supports dual sparsity (i.e., activation sparsity and weight sparsity) in which activation sparsity may be random sparsity and weight sparsity may be structured weight sparsity (N:M = 1:4, 2:4, 2:8, 4:8) and random weight sparsity.

The "Hybrid Sparsity-V1" architecture may run DNN tasks with various modes, such as: (1) a N:M=2:8 structured weight-sparse mode that provides a 4x speed up and ~3.5 power/area efficiency improvement (as compared to a dense baseline architecture); (2) a dual sparsity mode with a N:M=2:4 structured sparsity with ~2.5x power/area efficiency improvement; (3) a dual sparsity mode with random weight sparsity with ~2.5 power efficiency improvement; (4) a random weight-sparsity mode with ~3x power efficiency improvement; and (5) a random activation-sparsity mode with ~1.5 power efficiency improvement.

The Hybrid Sparsity-V1 architecture may be configured to use weight-preprocessing techniques that may be more efficient for DNN inference-type operations. A second embodiment, referred to herein as a Hybrid-V2 architecture, a NPU architecture uses AND-gates that may be more efficient for DNN training-type operations.

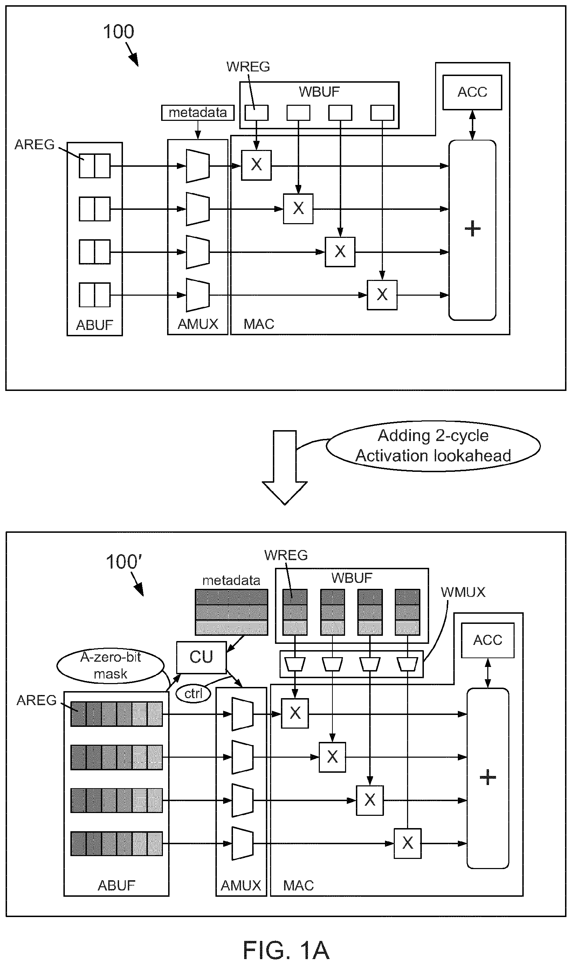

FIG. 1A depicts an example of a NPU architecture 100 and an example of a dual-sparsity NPU architecture 100' according to the subject matter disclosed herein. The NPU architecture 100 is depicted at the top of FIG. 1A and the example of the dual-sparsity NPU architecture 100' is depicted at the bottom of FIG. 1A The example NPU architecture 100 is configured for a 2:4 fine-grain structured weight sparsity and the dual-sparsity NPU architecture 100' is configured for a 2:4 fine-grain structured weight sparsity that includes a 2-cycle activation lookahead. The dual-sparsity NPU architecture 100' is referred to herein as a Hybrid Sparsity-V1.

The NPU architecture 100 may include a multiply and accumulate (MAC) unit having an array of four multipliers (each indicated by a block containing an X). The accumulator portion of the MAC unit includes an adder tree (indicated by a block containing a +) and an accumulator ACC. Additionally, the NPU architecture 100 may include a weight buffer WBUF array that contains 1 weight register WREG for each multiplier of the MAC unit, and an activation buffer ABUF that contains a depth of 2 activation registers AREG for each multiplier of the MAC unit. An activation multiplexer AMUX may include an activation multiplexer (indicated by a trapezoidal shape) for each multiplier of the MAC unit. Although not explicitly shown, each activation multiplexer has a fan in of 3. That is, the fan in of each activation multiplexer is connected (not shown) to 3 separate AREGs. In operation, a weight value in a WREG is input to a multiplier as a first input. Weight metadata is used to control the multiplexers of the AMUX to select an appropriate AREG in the ABUF corresponding to each weight value. The activation value in a selected AREG is input to a multiplier as a second input corresponding to first input to the multiplier. The NPU architecture 100 provides a speed up of 2x over a NPU architecture configured only for weight sparsity. Additional details of the NPU architecture 100 are provided in (attorney docket 1535-849), which is incorporated by reference herein.

By adding a 2-cycle random activation lookahead, the NPU architecture 100 may be reconfigured to be the Hybrid Sparsity-V1 architecture 100', which is configured for dual sparsity that includes a 2:4 fine-grain structured weight sparsity that includes a 2-cycle random activation lookahead. The MAC unit of the Hybrid Sparsity-V1 architecture 100' is not changed from the NPU architecture 100. The WBUF is reconfigured to include a WREG depth of 3. A weight multiplexer array WMUX is added to select an appropriate weight value stored in the WBUF. The ABUF is also increased in size to provide the 2-cycle random activation lookahead, so that the reconfigured ABUF stores 3 cycles for each multiplier of the MAC unit. The AMUX is reconfigured so that each multiplexer has a fan in of 9. That is, each multiplexer of the AMUX is a 9-to-1 multiplexer. A control unit is also added that in operation receives an activation zero-bit mask (A-zero-bit mask) and weight metadata in order to control (ctrl) the multiplexers of the AMUX to select appropriate AREGs. The example of the dual-sparsity NPU architecture 100' provides a speed up of ~3x over a NPU architecture configured for only weight sparsity.

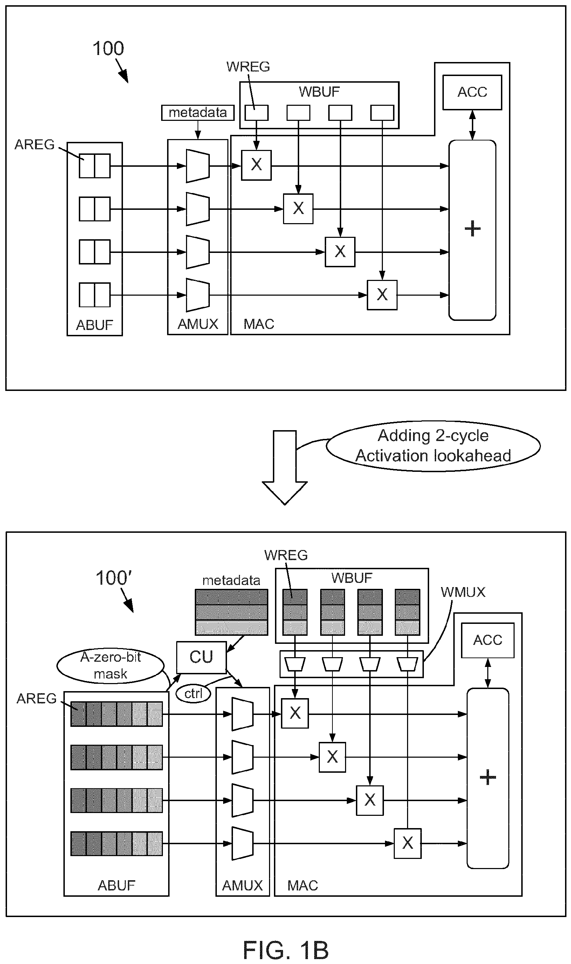

The Hybrid Sparsity-V1 architecture 100' may also be used for random weight sparsity operations. FIG. 1B depicts the example of a NPU architecture 100, and an example of a dual-sparsity NPU architecture 100' according to the subject matter disclosed herein. The NPU architecture 100 is depicted at the top of FIG. 1B and the example of the dual-sparsity NPU architecture 100' is depicted at the bottom of FIG. 1B. The example NPU architecture 100 is configured for a random weight sparsity of (T_{w}=1,C_{w}=1,Tₐ=0). Configuration details for the NPU architecture 100 are described above in connection with FIG. 1A.

The 2-cycle random activation lookahead reconfiguration described above of the NPU architecture 100 to form the Hybrid Sparsity-V1 architecture 100' may also be used for random weight sparsity operations that includes a 2-cycle random activation lookahead. By adding the 2-cycle random activation lookahead, the random sparsity mode of the Hybrid Sparsity-V1 architecture provides a random sparsity mode of (T_{w}=1,C_{w}=1,Tₐ=2). Although configured to operate with a different sparsity mode, the dual-sparsity NPU architecture 100' depicted in FIG. 1B is still referred to as the Hybrid Sparsity-V1. The Hybrid Sparsity-V1 architecture 100' is the same as described above in connection with FIG. 1A.

For random weight sparsity, the effective activation lookahead the NPU architecture 100' is 5 cycles based on the 6 AREG depth of the ABUF with a maximum speed up of 6x (typically 2x) over a NPU architecture configured for only weight sparsity. Regarding weight preprocessing of random weight sparsity, if the weight mask is updated infrequently, software-based preprocessing may be used. If the weight mask is updated frequently, then hardware-based preprocessing by adding a weight-preprocessing unit may be a better approach.

Using similar design logic, the Hybrid Sparsity-V1 architecture 100' may be used to support different sparsity modes. That is, the Hybrid Sparsity-V1 architecture 100' also supports 1:4 and 4:8 sparsity modes when configured for weight-only structured sparsity based on a 2:8 structured-sparsity mode architecture that is reconfigured for the other modes, such as 1:4, 2:4 and 4:8 structured sparsity modes. Table 1 sets forth some aspects of Hybrid Sparsity-V1 architecture 100'. In Table 1, an "S" means "structured" for structured sparsity, and an "R" means "random" for random sparsity. The top row of Table 1 shows that the Hybrid Sparsity-V1 architecture may be used to support 2:4 structured weight sparsity and random activation sparsity with 2-cycle ahead. The next row down shows that the Hybrid Sparsity-V1 architecture may be used to support 2:4 structured 2:4 weight sparsity alone. If 2:8 structured weight sparsity is desired, then all of the sparse logic may be used on the weight side of the architecture, which provides a 4x speed up. The third row down shows that the Hybrid Sparsity-V1 architecture supports random weight sparsity with 3-cycle activation lookahead and 1-channel weight lookaside, which provides a maximum of a 4x speed up. The fourth row down shows that the Hybrid Sparsity-V1 architecture may be configured for only for activation sparsity by adding 1-channel activation lookaside.

**Table 1**

| Architecture | Sparsity | | HW Overhead | | | | Ctrl |
|---|---|---|---|---|---|---|---|
| | W-sparse | A-sparse | ABUF | AMUX | WBUF | WMUX | |
| Hybrid | S(N:M=2:4) | R(Tₐ=2) | 6 | 9 | 3 | 5 | Arbiter (for A-only) +CU |
| | S(N:M=2:4) | - | | | | | |
| | R(T_{w}=3,C_{w}=1) | - | | | | | |
| | - | (Tₐ=2, Cₐ=1) | | | | | (for Dual) |

The Hybrid Sparsity-V1 architecture supports four different sparsity modes for a hardware cost per multiplier of a 6-AREG depth in the ABUF, a 9-to-1 AMUX per multiplier, a 3-WREG depth in the WBUF, and a 5-to-1 WMUX. Additionally, the additional hardware includes a controller (arbiter) to arbitrate the activations and a control unit to control both weight and activation movement for dual sparsity.

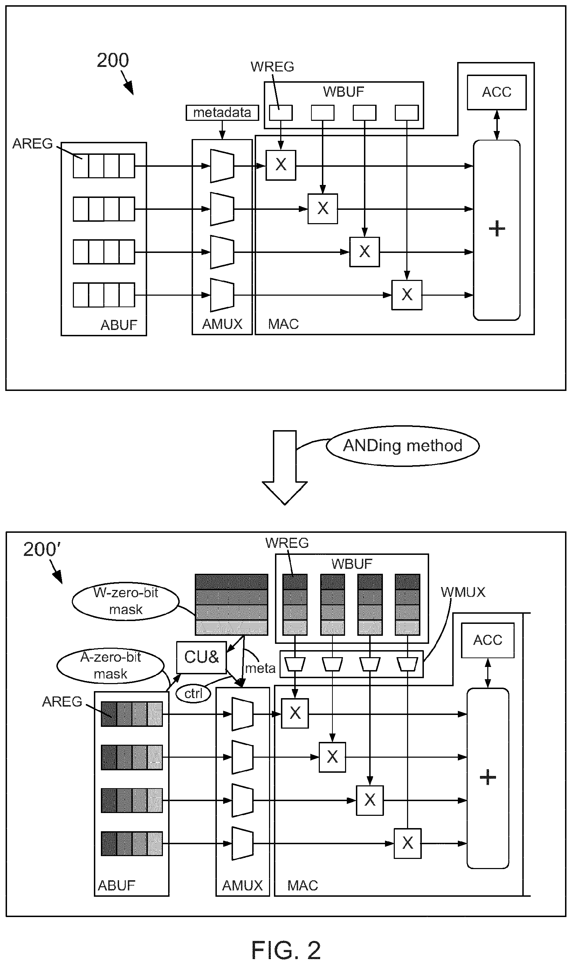

FIG. 2 depicts an example of a NPU architecture 200 and an example of a Hybrid Sparsity-V2 architecture 200' according to the subject matter disclosed herein. The NPU architecture 200 is depicted at the top of FIG. 2 and the example embodiment of the NPU architecture 200' is depicted at the bottom of FIG. 2. The example NPU architecture 200 is configured for both a 2:8 fine-grain structured and a random weight sparsity (T_{w}=3,C_{w}=1). The dual-sparsity NPU architecture 200' configured for dual sparsity and uses an ANDing technique. The dual-sparsity NPU architecture 200' is referred to herein as a Hybrid Sparsity-V2.

The NPU architecture 200 may include a multiply and accumulate (MAC) unit having an array of four multipliers (indicated by a block containing an X). The accumulator portion of the MAC unit includes an adder tree (indicated by a block containing a +) and an accumulator ACC. Additionally, the NPU architecture 200 may include a weight buffer WBUF that contains 1 weight register WREG for each multiplier of the MAC unit, and an activation buffer ABUF that contains a depth of 4 activation registers AREG for each multiplier of the MAC unit. An activation multiplexer AMUX may include an activation multiplexer (indicated by a trapezoidal shape) for each multiplier of the MAC unit. Although not explicitly shown, each activation multiplexer has a fan in of 7. That is, the fan in of each activation multiplexer is connected (not shown) to 7 separate AREGs. In operation, a weight value in a WREG is input to a multiplier as a first input. Weight metadata is used to control the multiplexers of the AMUX to select an appropriate AREG in the ABUF corresponding to each weight value. The activation value in a selected AREG is input to a multiplier as a second input corresponding to first input to the multiplier. Weight metadata is used to control the multiplexers of the AMUX to select an appropriate AREG in the ABUF. The NPU architecture 200 provides a speed up of 4x for a 2:8 fine-grain structured weight sparsity, or a speed up of 2.7x for a random weight sparsity. Additional details of the NPU architecture 200 are provided in (attorney docket 1535-849), which is incorporated by reference herein.

By using an ANDing technique and increasing the size of the WBUF, the example NPU architecture 200 may be reconfigured to form the Hybrid Sparsity-V2 architecture 200,' which is configured for dual sparsity and provides a speed up of 3x. The MAC unit of the Hybrid Sparsity-V2 architecture 200' is not changed from the NPU architecture 200. The WBUF is reconfigured to include a WREG depth of 4. The ABUF and the AMUX are not changed from the NPU architecture 200. A control unit (CU) that includes an ANDing (&) functionality is added that may receive an activation zero-bit mask (A-zero-bit mask), a weight zero-bit-mask (W-zero-bit mask) and weight metadata, and ANDs the two bit masks and uses the weight metadata to control (ctrl) the multiplexers of the AMUX to select appropriate AREGs in operation. The example embodiment of the NPU architecture 200' provides a speed up of ~3x.

Table 2 sets forth some configuration aspects of Hybrid Sparsity-V2 architecture 200'. In Table 2, an "S" means "structured" for structured sparsity, and an "R" means "random" for random sparsity. Additionally, an "L" associated with the Hybrid Sparsity-V1 indicates a relatively large hardware overhead configuration, and an "S" associated with the Hybrid Sparsity-V1 indicates a relatively small hardware overhead configuration. The different sparsity configurations are indicated below the Hardware heading. The register depths are shown below the ABUF and the WBUF headings, and the multiplexer fan ins are shown below the AMUX and WMUX headings for the different sparsity configurations. The number of adder trees for each sparsity configuration are shown below the ADT heading. The CTRL heading indicates that type of control that is used for a sparsity configuration in which "CU" stands for Control Unit, "Arb" stands for an Arbitrator unit, "Preproc" stands for preprocessing, and "On-the-Fly" stands for on-the-fly processing. Speed up for the different sparsity configurations is shown below the Speed Up heading. The "-/(4)" and the "-/(7) appearing towards the bottom of Table 2 respectively indicate the WBUF and WMUX resources associated with "preprocessing" and "on-the-fly" control modes. A "-" indicates that no WBUF or WMUX resources are needed with the weight tensors are compressed and metadata is generated in compile time. If "on-the-fly" mode is used in which weight tensors are not compressed in compile time and metadata is not generated prior to the runtime, the WBUF uses a fan-in of 4 and WMUX has a depth of 7 registers.

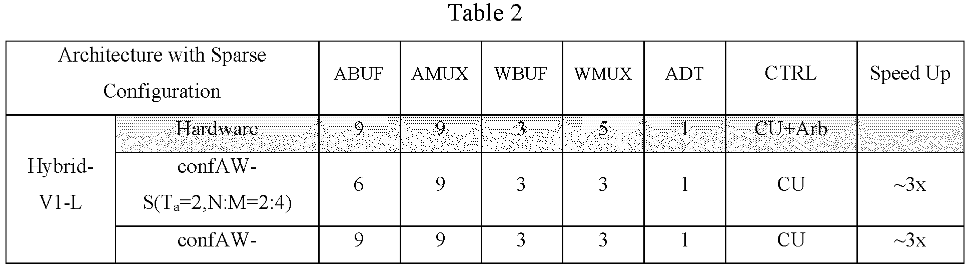

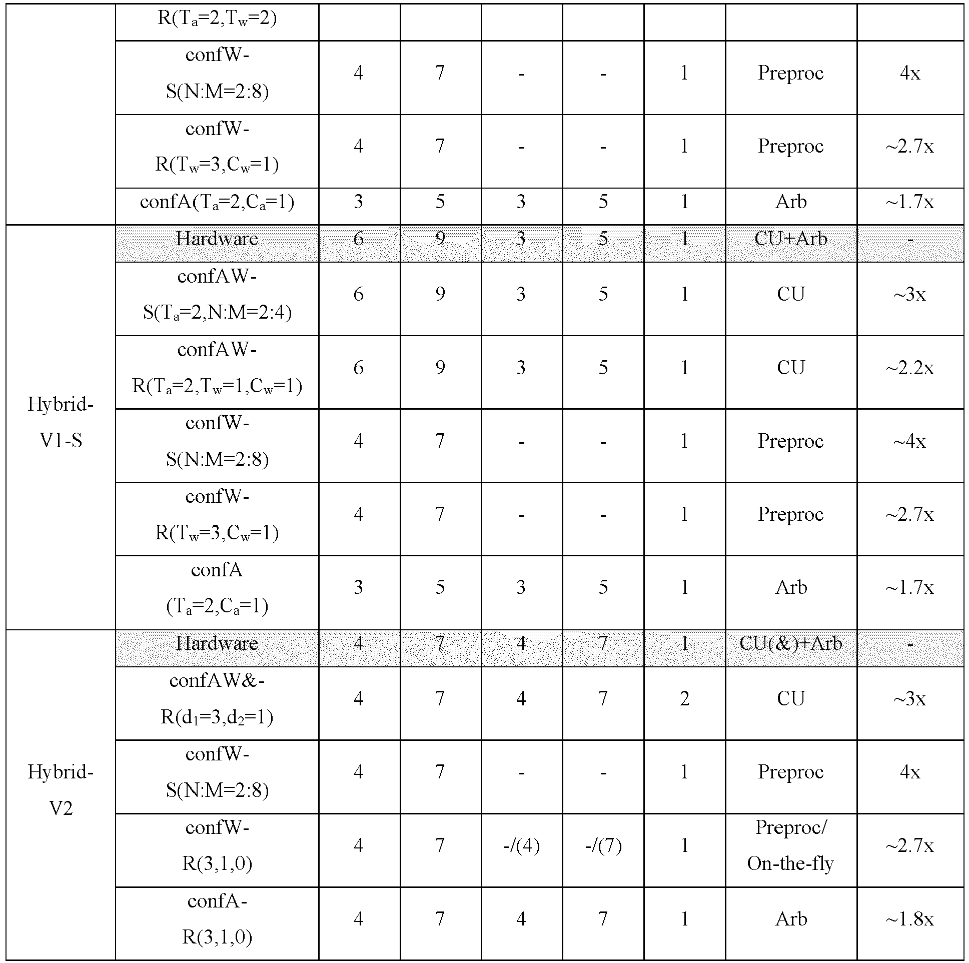

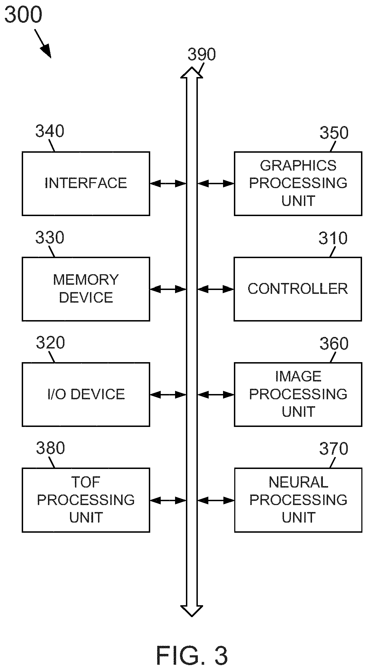

FIG. 3 depicts an electronic device 300 that may include at least one NPU that supports dual-sparsity modes according to the subject matter disclosed herein. Electronic device 300 and the various system components of electronic device 300 may be formed from one or modules. The electronic device 300 may include a controller (or CPU) 310, an input/output device 320 such as, but not limited to, a keypad, a keyboard, a display, a touchscreen display, a 2D image sensor, a 3D image sensor, a memory 330, an interface 340, a GPU 350, an imaging-processing unit 360, a neural processing unit 370, a TOF processing unit 380 that are coupled to each other through a bus 390. In one embodiment, the 2D image sensor and/or the 3D image sensor may be part of the imaging processing unit 360. In another embodiment, the 3D image sensor may be part of the TOF processing unit 380. The controller 310 may include, for example, at least one microprocessor, at least one digital signal processor, at least one microcontroller, or the like. The memory 330 may be configured to store a command code to be used by the controller 310 and/or to store a user data. The neural processing unit 370 may include at least one NPU that supports dual-sparsity modes according to the subject matter disclosed herein.

The interface 340 may be configured to include a wireless interface that is configured to transmit data to or receive data from, for example, a wireless communication network using a RF signal. The wireless interface 340 may include, for example, an antenna. The electronic system 300 also may be used in a communication interface protocol of a communication system, such as, but not limited to, Code Division Multiple Access (CDMA), Global System for Mobile Communications (GSM), North American Digital Communications (NADC), Extended Time Division Multiple Access (E-TDMA), Wideband CDMA (WCDMA), CDMA2000, Wi-Fi, Municipal Wi-Fi (Muni Wi-Fi), Bluetooth, Digital Enhanced Cordless Telecommunications (DECT), Wireless Universal Serial Bus (Wireless USB), Fast low-latency access with seamless handoff Orthogonal Frequency Division Multiplexing (Flash-OFDM), IEEE 802.20, General Packet Radio Service (GPRS), iBurst, Wireless Broadband (WiBro), WiMAX, WiMAX-Advanced, Universal Mobile Telecommunication Service - Time Division Duplex (UMTS-TDD), High Speed Packet Access (HSPA), Evolution Data Optimized (EVDO), Long Term Evolution - Advanced (LTE-Advanced), Multichannel Multipoint Distribution Service (MMDS), Fifth-Generation Wireless (5G), Sixth-Generation Wireless (6G), and so forth.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, it should be understood that the described program components and systems can generally be integrated together in a single software product or packaged into multiple software products.

Thus, particular embodiments of the subject matter have been described herein. Other embodiments are within the scope of the following claims. In some cases, the actions set forth may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A neural processing unit (100, 100', 200, 200', 370), comprising:
a weight buffer (WBUF) configured to store weight values in an arrangement selected from a group comprising a structured weight sparsity arrangement and a random weight sparsity arrangement;
a weight multiplexer configured to output one of the weight values stored in the weight buffer (WBUF) as a first operand value based on the selected weight sparsity arrangement;
an activation buffer (ABUF) configured to store activation values;
an activation multiplexer (AMUX) coupled to the activation buffer (ABUF), the activation multiplexer (AMUX) configured to output one of the activation values stored in the activation buffer (ABUF) as a second operand value, the second operand value and the first operand value forming an operand value pair; and
a multiplier unit (MAC) configured to output a product value for the operand value pair, wherein:
the weight buffer (WBUF) comprises an array of weight registers (WREG), each weight register (WREG) being configured to store a weight value that is in the arrangement selected from the group comprising the structured weight sparsity arrangement and the random weight sparsity arrangement,
the weight multiplexer is configured to select a weight register (WREG) based the weight sparsity arrangement of the weight values stored in the weight buffer (WBUF) and output the weight value stored in the selected weight register (WREG) as the first operand value,
the activation buffer (ABUF) comprises an array of activation registers (AREG), each activation register (AREG) being configured to store an activation value, and
the activation multiplexer (AMUX) is configured to select and output an activation value stored in the activation buffer (ABUF) as the second operand value, the second operand value corresponding to the first operand value and forming the operand value pair.

2. The neural processing unit (100, 100', 200, 200', 370) of claim 1, wherein the weight multiplexer is further configured to select the weight value in a lookahead manner, and
wherein the activation multiplexer (AMUX) is further configured to select the activation value in the lookahead manner.

3. The neural processing unit (100, 100', 200, 200', 370) of claim 1 or 2, wherein the weight multiplexer is further configured to select the weight value in a lookaside manner, and
wherein the activation multiplexer (AMUX) is further configured to select the activation value in the lookaside manner.

4. The neural processing unit (100, 100', 200, 200', 370) of any one of claims 1 to 3, wherein weight values are stored in the weight buffer (WBUF) in the structured weight sparsity arrangement,
the neural processing unit (100, 100', 200, 200', 370) further comprising a control unit (CU) configured to control the activation multiplexer (AMUX) to select and output the activation value based on the structured weight sparsity arrangement.

5. The neural processing unit (100, 100', 200, 200', 370) of any one of claims 1 to 3, wherein weight values are stored in the weight buffer (WBUF) in the random weight sparsity arrangement,
the neural processing unit (100, 100', 200, 200', 370) further comprising a control unit (CU) configured to control the activation multiplexer (AMUX) to select and output the activation value based on the random weight sparsity arrangement.

6. The neural processing unit (100, 100', 200, 200', 370) of any one of claims 1 to 5, comprising:
a weight multiplexer array (WMUX) comprising the weight multiplexer and being configured to output one or more of the weight values stored in the weight buffer (WBUF) as first operand values based on the selected weight sparsity arrangement;
an activation multiplexer (AMUX) array comprising the activation multiplexer (AMUX) and inputs to the activation multiplexer (AMUX) array coupled to the activation buffer (ABUF), the activation multiplexer (AMUX) array configured to output one or more of the activation values stored in the activation buffer (ABUF) as second operand values, each respective second operand value and a corresponding first operand value forming an operand value pair; and
a multiplier array comprising the multiplier unit (MAC) and configured to output a product value for each operand value pair.

7. The neural processing unit (100, 100', 200, 200', 370) of claim 6, wherein the weight multiplexer array (WMUX) is further configured to select the one or more weight values in a lookahead manner, and
wherein the activation multiplexer (AMUX) array is further configured to select the one or more activation values in the lookahead manner.

8. The neural processing unit (100, 100', 200, 200', 370) of claim 6 or 7, wherein the weight multiplexer array (WMUX) is further configured to select the one or more weight values in a lookaside manner, and
wherein the activation multiplexer (AMUX) array is further configured to select the one or more activation values in the lookaside manner.

9. The neural processing unit (100, 100', 200, 200', 370) of any one of claims 6 to 8, wherein the weight multiplexer array (WMUX) is configured to select the one or more weight values in a lookahead of at least 3 timeslots and in a lookaside of 1 channel, and
wherein the activation multiplexer (AMUX) array is configured to select the one or more activation values in a lookahead of at least 3 time slots and in a lookaside of at least 2 channels.

10. The neural processing unit (100, 100', 200, 200', 370) of any one of claims 6 to 9, wherein the weight values are stored in the weight buffer (WBUF) in the structured weight sparsity arrangement,
the neural processing unit (100, 100', 200, 200', 370) further comprising a control unit (CU) configured to control the activation multiplexer (AMUX) array to select and output one or more activation values stored in the activation buffer (ABUF) based on the structured weight sparsity arrangement.

11. The neural processing unit (100, 100', 200, 200', 370) of any one of claims 6 to 9, wherein the weight values are stored in the weight buffer (WBUF) in the random weight sparsity arrangement,
the neural processing unit (100, 100', 200, 200', 370) further comprising a control unit (CU) configured to control the activation multiplexer (AMUX) array to select and output one or more activation values stored in the activation buffer (ABUF) based on the random weight sparsity arrangement of the weight values.

12. The neural processing unit (100, 100', 200, 200', 370) of claim 11, wherein the activation values are stored in the activation buffer (ABUF) in a random activation sparsity arrangement, and
wherein the control unit (CU) is further configured to control the activation multiplexer (AMUX) array to select and output the one or more activation values based on the random weight sparsity arrangement and on the random activation sparsity arrangement.

13. The neural processing unit (100, 100', 200, 200', 370) of claim 12, wherein the control unit (CU) is further configured to select and output the one or more activation values based on an ANDing of an activation zero-bit mask of activation values stored in the activation buffer (ABUF) and a weight zero-bit mask of weight values stored in the weight buffer (WBUF).

14. The neural processing unit (100, 100', 200, 200', 370) of any one of claims 6 to 13, wherein the weight multiplexer array (WMUX) comprises four multiplexers, the activation multiplexer (AMUX) array comprises four second multiplexers and the multiplier array comprises four multipliers.

## Patentansprüche

1. Neuronale Verarbeitungseinheit (100, 100', 200, 200', 370), die Folgendes umfasst:
einen Gewichtspuffer (WBUF), der so konfiguriert ist, dass er Gewichtswerte in einer Anordnung speichert, die aus einer Gruppe ausgewählt ist, die eine strukturierte Gewichtsseltenheitsanordnung und eine zufällige Gewichtsseltenheitsanordnung umfasst;
einen Gewichtsmultiplexer, der so konfiguriert ist, dass er einen der in dem Gewichtspuffer (WBUF) gespeicherten Gewichtswerte als einen ersten Operandenwert auf der Grundlage der ausgewählten Gewichtsseltenheitsanordnung ausgibt;
einen Aktivierungspuffer (ABUF), der zum Speichern von Aktivierungswerten konfiguriert ist;
einen Aktivierungsmultiplexer (AMUX), der mit dem Aktivierungspuffer (ABUF) gekoppelt ist, wobei der Aktivierungsmultiplexer (AMUX) so konfiguriert ist, dass er einen der in dem Aktivierungspuffer (ABUF) gespeicherten Aktivierungswerte als einen zweiten Operandenwert ausgibt, wobei der zweite Operandenwert und der erste Operandenwert ein Operandenwertepaar bilden; und
eine Multipliziereinheit (MAC), die so konfiguriert ist, dass sie einen Produktwert für das Operandenwertepaar ausgibt,
wobei:
der Gewichtspuffer (WBUF) ein Array von Gewichtsregistern (WREG) umfasst, wobei jedes Gewichtsregister (WREG) so konfiguriert ist, dass es einen Gewichtswert speichert, der sich in der Anordnung befindet, die aus der Gruppe ausgewählt ist, die die strukturierte Gewichtsseltenheitsanordnung und die zufällige Gewichtsseltenheitsanordnung umfasst,
der Gewichtsmultiplexer so konfiguriert ist, dass er ein Gewichtsregister (WREG) auf der Grundlage der Gewichtsseltenheitsanordnung der in dem Gewichtspuffer (WBUF) gespeicherten Gewichtswerte auswählt und den in dem ausgewählten Gewichtsregister (WREG) gespeicherten Gewichtswert als den ersten Operandenwert ausgibt,
der Aktivierungspuffer (ABUF) ein Array von Aktivierungsregistern (AREG) umfasst, wobei jedes Aktivierungsregister (AREG) zum Speichern eines Aktivierungswertes konfiguriert ist, und
der Aktivierungsmultiplexer (AMUX) so konfiguriert ist, dass er einen in dem Aktivierungspuffer (ABUF) gespeicherten Aktivierungswert als den zweiten Operandenwert auswählt und ausgibt, wobei der zweite Operandenwert dem ersten Operandenwert entspricht und das Operandenwertepaar bildet.

2. Neuronale Verarbeitungseinheit (100, 100', 200, 200', 370) nach Anspruch 1, wobei der Gewichtsmultiplexer ferner so konfiguriert ist, dass er den Gewichtswert in einer Vorausschau-Weise auswählt, und
wobei der Aktivierungsmultiplexer (AMUX) weiterhin so konfiguriert ist, dass er den Aktivierungswert in der Vorausschau-Weise auswählt.

3. Neuronale Verarbeitungseinheit (100, 100', 200, 200', 370) nach Anspruch 1 oder 2, wobei der Gewichtsmultiplexer weiterhin so konfiguriert ist, dass er den Gewichtswert in einer Nebenschau-Weise auswählt, und
wobei der Aktivierungsmultiplexer (AMUX) ferner so konfiguriert ist, dass er den Aktivierungswert in der Nebenschau-Weise auswählt.

4. Neuronale Verarbeitungseinheit (100, 100', 200, 200', 370) nach einem der Ansprüche 1 bis 3, wobei Gewichtswerte in dem Gewichtspuffer (WBUF) in der strukturierten Gewichtsseltenheitsanordnung gespeichert werden,
wobei die neuronale Verarbeitungseinheit (100, 100', 200, 200', 370) ferner eine Steuereinheit (CU) umfasst, die so konfiguriert ist, dass sie den Aktivierungsmultiplexer (AMUX) so steuert, dass er den Aktivierungswert auf der Grundlage der strukturierten Gewichtsseltenheitsanordnung auswählt und ausgibt.

5. Neuronale Verarbeitungseinheit (100, 100', 200, 200', 370) nach einem der Ansprüche 1 bis 3, wobei Gewichtswerte in dem Gewichtspuffer (WBUF) in der zufälligen Gewichtsseltenheitsanordnung gespeichert werden,
wobei die neuronale Verarbeitungseinheit (100, 100', 200, 200', 370) ferner eine Steuereinheit (CU) umfasst, die so konfiguriert ist, dass sie den Aktivierungsmultiplexer (AMUX) so steuert, dass er den Aktivierungswert auf der Grundlage der zufälligen Gewichtsseltenheitsanordnung auswählt und ausgibt.

6. Neuronale Verarbeitungseinheit (100, 100', 200, 200', 370) nach einem der Ansprüche 1 bis 5, umfassend:
ein Gewichtsmultiplexer-Array (WMUX), das den Gewichtsmultiplexer umfasst und so konfiguriert ist, dass es einen oder mehrere der im Gewichtspuffer (WBUF) gespeicherten Gewichtswerte als erste Operandenwerte auf der Grundlage der ausgewählten Gewichtsseltenheitsanordnung ausgibt;
ein Aktivierungsmultiplexer (AMUX)-Array, das den Aktivierungsmultiplexer (AMUX) und Eingänge zu dem mit dem Aktivierungspuffer (ABUF) gekoppelten Aktivierungsmultiplexer (AMUX)-Array umfasst, wobei das Aktivierungsmultiplexer (AMUX)-Array so konfiguriert ist, dass es einen oder mehrere der in dem Aktivierungspuffer (ABUF) gespeicherten Aktivierungswerte als zweite Operandenwerte ausgibt, wobei jeder jeweilige zweite Operandenwert und ein entsprechender erster Operandenwert ein Operandenwertepaar bilden; und
ein Multiplizierer-Array, das die Multiplizierer-Einheit (MAC) umfasst und so konfiguriert ist, dass es einen Produktwert für jedes Operandenwertepaar ausgibt.

7. Neuronale Verarbeitungseinheit (100, 100', 200, 200', 370) nach Anspruch 6, wobei das Gewichtsmultiplexer-Array (WMUX) ferner so konfiguriert ist, dass es den einen oder die mehreren Gewichtswerte in einer Vorausschau-Weise auswählt, und
wobei das Aktivierungsmultiplexer-Array (AMUX) weiterhin so konfiguriert ist, dass es den einen oder die mehreren Aktivierungswerte in der Vorausschau-Weise auswählt.

8. Neuronale Verarbeitungseinheit (100, 100', 200, 200', 370) nach Anspruch 6 oder 7, wobei das Gewichtsmultiplexer-Array (WMUX) ferner so konfiguriert ist, dass es den einen oder die mehreren Gewichtswerte in einer Nebenschau-Weise auswählt, und
wobei das Aktivierungsmultiplexer-Array (AMUX) ferner so konfiguriert ist, dass es den einen oder die mehreren Aktivierungswerte in der Nebenschau-Weise auswählt.

9. Neuronale Verarbeitungseinheit (100, 100', 200, 200', 370) nach einem der Ansprüche 6 bis 8, wobei das Gewichtsmultiplexer-Array (WMUX) so konfiguriert ist, dass es den einen oder die mehreren Gewichtswerte in einer Vorausschau von mindestens 3 Zeitschlitzen und in einer Nebenschau von 1 Kanal auswählt, und
wobei das Aktivierungsmultiplexer-Array (AMUX) so konfiguriert ist, dass es den einen oder die mehreren Aktivierungswerte in einer Vorausschau von mindestens 3 Zeitschlitzen und in einer Nebenschau von mindestens 2 Kanälen auswählt.

10. Neuronale Verarbeitungseinheit (100, 100', 200, 200', 370) nach einem der Ansprüche 6 bis 9, wobei die Gewichtswerte in dem Gewichtspuffer (WBUF) in der strukturierten Gewichtsseltenheitsanordnung gespeichert sind,
die neuronale Verarbeitungseinheit (100, 100', 200, 200', 370) ferner eine Steuereinheit (CU) umfasst, die so konfiguriert ist, dass sie das Aktivierungsmultiplexer-Array (AMUX) so steuert, dass es einen oder mehrere Aktivierungswerte, die in dem Aktivierungspuffer (ABUF) gespeichert sind, auf der Grundlage der strukturierten Gewichtsseltenheitsanordnung auswählt und ausgibt.

11. Neuronale Verarbeitungseinheit (100, 100', 200, 200', 370) nach einem der Ansprüche 6 bis 9, wobei die Gewichtswerte in dem Gewichtspuffer (WBUF) in der zufälligen Gewichtsseltenheitsanordnung gespeichert sind,
die neuronale Verarbeitungseinheit (100, 100', 200, 200', 370) ferner eine Steuereinheit (CU) umfasst, die so konfiguriert ist, dass sie das Aktivierungsmultiplexer-Array (AMUX) so steuert, dass es einen oder mehrere Aktivierungswerte, die in dem Aktivierungspuffer (ABUF) gespeichert sind, auf der Grundlage der zufälligen Gewichtsseltenheitsanordnung der Gewichtswerte auswählt und ausgibt.

12. Neuronale Verarbeitungseinheit (100, 100', 200, 200', 370) nach Anspruch 11, wobei die Aktivierungswerte in dem Aktivierungspuffer (ABUF) in einer zufälligen Aktivierungsseltenheitsanordnung gespeichert sind, und
wobei die Steuereinheit (CU) ferner so konfiguriert ist, dass sie das Aktivierungsmultiplexer-Array (AMUX) so steuert, dass es den einen oder die mehreren Aktivierungswerte auf der Grundlage der zufälligen Gewichtsseltenheitsanordnung und der zufälligen Aktivierungsseltenheitsanordnung auswählt und ausgibt.

13. Neuronale Verarbeitungseinheit (100, 100', 200, 200', 370) nach Anspruch 12, wobei die Steuereinheit (CU) ferner so konfiguriert ist, dass sie den einen oder die mehreren Aktivierungswerte auf der Grundlage einer UND-Verknüpfung einer Aktivierungs-Null-Bit-Maske von in dem Aktivierungspuffer (ABUF) gespeicherten Aktivierungswerten und einer Gewichts-Null-Bit-Maske von in dem Gewichtspuffer (WBUF) gespeicherten Gewichtswerten auswählt und ausgibt.

14. Neuronale Verarbeitungseinheit (100, 100', 200, 200', 370) nach einem der Ansprüche 6 bis 13, wobei das Gewichtsmultiplexer-Array (WMUX) vier Multiplexer, das Aktivierungsmultiplexer-Array (AMUX) vier zweite Multiplexer und das Multiplikator-Array vier Multiplikatoren umfasst.

## Revendications

1. Unité de traitement neuronal (100, 100', 200, 200', 370), comprenant:
un tampon de poids (WBUF) configuré pour stocker des valeurs de poids dans une disposition sélectionnée dans un groupe comprenant une disposition de sparsité de poids structurée et une disposition de sparsité de poids aléatoire;
un multiplexeur de poids configuré pour fournir l'une des valeurs de poids stockées dans le tampon de poids (WBUF) en tant que première valeur d'opérande sur la base de la disposition de sparsité de poids sélectionnée;
un tampon d'activation (ABUF) configuré pour stocker des valeurs d'activation;
un multiplexeur d'activation (AMUX) couplé au tampon d'activation (ABUF), le multiplexeur d'activation (AMUX) configuré pour fournir l'une des valeurs d'activation stockées dans le tampon d'activation (ABUF) en tant que deuxième valeur d'opérande, la deuxième valeur d'opérande et la première valeur d'opérande formant une paire de valeurs d'opérande; et
une unité de multiplication (MAC) configurée pour fournir une valeur de produit pour la paire de valeurs d'opérande,
dans laquelle:
le tampon de poids (WBUF) comprend un réseau de registres de poids (WREG), chaque registre de poids (WREG) étant configuré pour stocker une valeur de poids qui se trouve dans la disposition sélectionnée dans le groupe comprenant la disposition de sparsité de poids structurée et la disposition de sparsité de poids aléatoire,
le multiplexeur de poids est configuré pour sélectionner un registre de poids (WREG) sur la base de la disposition de sparsité de poids des valeurs de poids stockées dans le tampon de poids (WBUF) et fournir la valeur de poids stockée dans le registre de poids sélectionné (WREG) en tant que première valeur d'opérande,
le tampon d'activation (ABUF) comprend un réseau de registres d'activation (AREG), chaque registre d'activation (AREG) étant configuré pour stocker une valeur d'activation, et
le multiplexeur d'activation (AMUX) est configuré pour sélectionner et fournir une valeur d'activation stockée dans le tampon d'activation (ABUF) en tant que deuxième valeur d'opérande, la deuxième valeur d'opérande correspondant à la première valeur d'opérande et formant la paire de valeurs d'opérande.

2. Unité de traitement neuronal (100, 100', 200, 200', 370) de la revendication 1, dans laquelle le multiplexeur de poids est en outre configuré pour sélectionner la valeur de poids de manière lookahead, et
dans laquelle le multiplexeur d'activation (AMUX) est en outre configuré pour sélectionner la valeur d'activation de manière lookahead.

3. Unité de traitement neuronal (100, 100', 200, 200', 370) de la revendication 1 ou 2, dans laquelle le multiplexeur de poids est en outre configuré pour sélectionner la valeur de poids d'une manière lookaside, et
dans laquelle le multiplexeur d'activation (AMUX) est en outre configuré pour sélectionner la valeur d'activation de manière lookaside.

4. Unité de traitement neuronal (100, 100', 200, 200', 370) de l'une quelconque des revendications 1 à 3, dans laquelle les valeurs de poids sont stockées dans le tampon de poids (WBUF) dans la disposition de sparsité de poids structurée,
l'unité de traitement neuronal (100, 100', 200, 200', 370) comprenant en outre une unité de commande (CU) configurée pour commander le multiplexeur d'activation (AMUX) afin de sélectionner et de fournir la valeur d'activation sur la base de la disposition de sparsité de poids structurée.

5. Unité de traitement neuronal (100, 100', 200, 200', 370) de l'une quelconque des revendications 1 à 3, dans laquelle les valeurs de poids sont stockées dans le tampon de poids (WBUF) dans la disposition de sparsité de poids aléatoire,
l'unité de traitement neuronal (100, 100', 200, 200', 370) comprenant en outre une unité de commande (CU) configurée pour commander le multiplexeur d'activation (AMUX) afin de sélectionner et de fournir la valeur d'activation sur la base de la disposition de sparsité de poids aléatoire.

6. Unité de traitement neuronal (100, 100', 200, 200', 370) de l'une quelconque des revendications 1 à 5, comprenant:
un réseau de multiplexeurs de poids (AMUX) comprenant le multiplexeur de poids et étant configuré pour fournir une ou plusieurs des valeurs de poids stockées dans le tampon de poids (WBUF) en tant que valeurs de premier opérande sur la base de la disposition de sparsité de poids sélectionnée;
un réseau de multiplexeurs d'activation (AMUX) comprenant le multiplexeur d'activation (AMUX) et les entrées du réseau de multiplexeurs d'activation (AMUX) couplées au tampon d'activation (ABUF), le réseau de multiplexeurs d'activation (AMUX) étant configuré pour fournir une ou plusieurs des valeurs d'activation stockées dans le tampon d'activation (ABUF) en tant que deuxièmes valeurs d'opérande, chaque deuxième valeur d'opérande respective et une première valeur d'opérande correspondante formant une paire de valeurs d'opérande; et
un réseau de multiplicateurs comprenant l'unité de multiplication (MAC) et configuré pour fournir une valeur de produit pour chaque paire de valeurs d'opérandes.

7. Unité de traitement neuronal (100, 100', 200, 200', 370) de la revendication 6, dans laquelle le réseau de multiplexeurs de poids (WMUX) est en outre configuré pour sélectionner une ou plusieurs valeurs de poids d'une manière lookahead, et
dans laqulle le réseau de multiplexeurs d'activation (AMUX) est en outre configuré pour sélectionner la ou les valeurs d'activation de manière lookahead.

8. Unité de traitement neuronal (100, 100', 200, 200', 370) de la revendication 6 ou 7, dans laquelle le réseau de multiplexeurs de poids (WMUX) est en outre configuré pour sélectionner la ou les valeurs de poids de manière lookaside, et
dans laquelle le réseau de multiplexeurs d'activation (AMUX) est en outre configuré pour sélectionner la ou les valeurs d'activation de manière lookaside.

9. Unité de traitement neuronal (100, 100', 200, 200', 370) de l'une quelconque des revendications 6 à 8, dans laquelle le réseau de multiplexeurs de poids (WMUX) est configuré pour sélectionner la ou les valeurs de poids lors d'un lookahead d'au moins 3 créneaux temporels et lors d'un lookaside de 1 canal, et
dans laquelle le réseau de multiplexeurs d'activation (AMUX) est configuré pour sélectionner la ou les valeurs d'activation lors d'un lookahead d'au moins 3 créneaux temporels et lors d'un lookaside d'au moins 2 canaux.

10. Unité de traitement neuronal (100, 100', 200, 200', 370) de l'une quelconque des revendications 6 à 9, dans laquelle les valeurs de poids sont stockées dans le tampon de poids (WBUF) dans la disposition de sparsité de poids structurée,
l'unité de traitement neuronal (100, 100', 200, 200', 370) comprenant en outre une unité de commande (CU) configurée pour commander le réseau de multiplexeurs d'activation (AMUX) afin de sélectionner et de fournir une ou plusieurs valeurs d'activation stockées dans le tampon d'activation (ABUF) sur la base de la disposition de sparsité de poids structurée.

11. Unité de traitement neuronal (100, 100', 200, 200', 370) de l'une quelconque des revendications 6 à 9, dans laquelle les valeurs de poids sont stockées dans le tampon de poids (WBUF) dans la disposition de sparsité de poids aléatoire,
l'unité de traitement neuronal (100, 100', 200, 200', 370) comprend en outre une unité de commande (CU) configurée pour commander le réseau de multiplexeurs d'activation (AMUX) afin de sélectionner et de fournir une ou plusieurs valeurs d'activation stockées dans le tampon d'activation (ABUF) sur la base de la disposition de sparsité de poids aléatoire des valeurs de poids.

12. Unité de traitement neuronal (100, 100', 200, 200', 370) de la revendication 11, dans laquelle les valeurs d'activation sont stockées dans le tampon d'activation (ABUF) selon une disposition de sparsité d'activation aléatoire, et
dans laquelle l'unité de commande (CU) est en outre configurée pour commander le réseau de multiplexeurs d'activation (AMUX) afin de sélectionner et de fournir la ou les valeurs d'activation sur la base de la disposition de sparsité de poids aléatoire et sur la disposition de sparsité d'activation aléatoire.

13. Unité de traitement neuronal (100, 100', 200, 200', 370) de la revendication 12, dans laquelle l'unité de commande (CU) est en outre configurée pour sélectionner et fournir la ou les valeurs d'activation sur la base d'une fonction ET entre un masque d'activation de zéro de bit des valeurs d'activation stockées dans le tampon d'activation (ABUF) et un masque de poids de zéro bit des valeurs de poids stockées dans le tampon de poids (WBUF).

14. Unité de traitement neuronal (100, 100', 200, 200', 370) de l'une quelconque des revendications 6 à 13, dans laquelle le réseau de multiplexeurs de poids (WMUX) comprend quatre multiplexeurs, le réseau de multiplexeurs d'activation (AMUX) comprend quatre deuxièmes multiplexeurs et le réseau de multiplicateurs comprend quatre multiplicateurs.
